# EUROPÄISCHE PATENTSCHRIFT

(11) **EP 4 566 694 B1**
(45) Veröffentlichungstag und Bekanntmachung des Hinweises auf die Patenterteilung: **04.02.2026**
(21) Anmeldenummer: 23214743.9
(22) Anmeldetag: 06.12.2023
(51) Int. Cl.: B01D 53/22

(54) **VERFAHREN ZUR HERSTELLUNG EINES AUFGEREINIGTEN, METHAN ENTHALTENDEN GASSTROMS**
PROCESS FOR PRODUCING PURIFIED GAS STREAM CONTAINING METHANE
PROCÉDÉ DE PRODUCTION D'UN FLUX GAZEUX PURIFIÉ CONTENANT DU MÉTHANE

(43) Veröffentlichungstag der Anmeldung: 11.06.2025
(73) Patentinhaber: Axiom Angewandte Prozeßtechnik Ges. m.b.H., 2483 Ebreichsdorf (AT)
(72) Erfinder: SZIVACZ, Johannes, 2483 Ebreichsdorf (AT); WINTERSPERGER, Johannes, 2483 Ebreichsdorf (AT)
(74) Vertreter: SONN Patentanwälte GmbH & Co KG

(56) Entgegenhaltungen:
- WO-A1-2015/071257
- WO-A2-2014/043730
- US-A1- 2020 308 494
- US-A1- 2022 203 294

## Beschreibung

Das Gebiet der vorliegenden Erfindung ist das der Verfahren zur Herstellung eines aufgereinigten, Methan enthaltenden Gasstroms aus einem Rohgasstrom, der Methan enthält und unter anderem mit Kohlendioxid verunreinigt ist.

Ein derartiges Verfahren ist aus der DE 20 2019 001 415 U1 bekannt. Die darin offenbarte Vorrichtung, die zwei Membrantrennstufen und einen Schwefelwasserstoff-Adsorber mit Aktivkohlebett umfasst, kann zur Abtrennung von Methan aus einem Methan, Kohlendioxid und Schwefelwasserstoff enthaltenden Gasgemisch eingesetzt werden, wobei das Gasgemisch in die Einspeisungsleitung der Vorrichtung eingespeist wird und Retentat aus der zweiten Membrantrennstufe als Produktgas, das mit Methan angereichert ist, abgezogen wird. Bei dem Gasgemisch handelt es sich beispielsweise um ein Erdgas, ein Deponiegas oder ein Biogas aus einem anaeroben Fermenter.

In der WO 2014/043730 A2 wird eine Vorrichtung und ein Verfahren zur Auftrennung eines Gasgemisches in Produktgas und Offgas mittels Gaspermeation beschrieben.

In der US 2022/0203294 Al wird ein Verfahren zur Gastrennung mit mindestens drei Membranstufen beschrieben.

In der US 2020/0308494 Al ist ein Verfahren zur Trennung von Kohlenwasserstoffen mithilfe von Membranen offenbart.

Biogas ist ein brennbares Gas, welches durch Vergärung von Biomasse jeder Art herstellbar ist. Als Ausgangsprodukte für die Vergärung eignen sich in erster Linie biogene Materialien, beispielsweise vergärbare, biomassehaltige Reststoffe, wie Klärschlamm, Bioabfall oder Speisereste, Wirtschaftsdünger (Gülle, Mist), bisher nicht genutzte Pflanzen sowie Pflanzenteile (beispielsweise Zwischenfrüchte, Pflanzenreste und dergleichen) sowie gezielt angebaute Energiepflanzen als nachwachsende Rohstoffe. Biogas entsteht durch den mikrobiellen Abbau der organischen Stoffe unter zumeist anoxischen Bedingungen, wobei Mikroorganismen die Kohlenhydrate, Eiweiße und Fette zu Methan und Kohlendioxid umsetzen.

Abhängig von den Substraten für die Fermentation kann Biogas neben kurzkettigen Kohlenwasserstoffen mitunter auch höhere Kohlenwasserstoffe (insbesondere ab C₆) als Verunreinigungen enthalten, welche eine Gaspermeationsmembran verblocken können. Diese Verunreinigungen sind zum einen Teil Vergärungsprodukte, zum anderen Teil können sie auch direkt auf das Substrat zurückgeführt werden. Die Abtrennung dieser Verunreinigungen geschieht zurzeit hauptsächlich durch die der Membrantrennvorrichtung vorgeschalteten Filter, insbesondere Aktivkohlefilter. Auch andere methanhaltige Gase, wie beispielsweise Erdgas, Deponiegas oder Erdölbegleitgas können solche Verunreinigungen aufweisen.

Trotz vorgeschaltetem Filter zur Abscheidung dieser Verunreinigungen gelangen über die Zeit auch höhere Kohlenwasserstoffe in die Membrantrennvorrichtung. So lehrt die WO 2015/071257 A1, dass die in der Praxis am häufigsten vorkommende Beeinträchtigung der Leistungsfähigkeit einer Gastrennmembran die Verblockung oder Verstopfung durch langkettige, flüssige, feste oder gasförmige Moleküle, meist Kohlenwasserstoffe, ist. Diese werden durch den zu trennenden Gasstrom in die Membran eingetragen werden. Diese Verblockung durch Ablagerung der langkettigen Kohlenwasserstoffe kann bereits in der porösen Stützschicht beginnen, aber der wesentliche, negative Einfluss findet durch die Verblockung durch diese langkettigen Moleküle an und in der selektiven Trennschicht statt.

Zur Lösung dieses Problems schlägt die WO 2015/071257 A1 ein Verfahren zur Reinigung einer Gaspermeationsmembran vor, wobei der Abtransport der Verunreinigungen gegen die Betriebsrichtung der Gaspermeationsmembran erfolgt, dadurch gekennzeichnet, dass bei einer zu reinigenden Gaspermeationsmembraneinheit permeatseitig ein dafür geeignetes Gas oder Gasgemisch eingebracht wird, wobei das nach Durchtritt durch die Gaspermeationsmembran mit Verunreinigungen beladene Gas oder Gasgemisch über den Feedgas-Einlass und/oder Retentat-Auslass der Gaspermeationsmembraneinheit abgeführt wird.

Dieses Regenerationsverfahren verursacht jedoch grundsätzlich unerwünschte Stehzeiten. Aufgabe der vorliegenden Erfindung ist nun, das Verfahren zur Herstellung eines aufgereinigten, Methan enthaltenden Gasstroms der eingangs erwähnten Art so zu verbessern, dass diese Stehzeiten zur Regeneration der Membran verringert werden.Daher stellt die vorliegende Erfindung ein Verfahren zur Herstellung eines aufgereinigten, insbesondere in Bezug auf den Kohlendioxidgehalt reduzierten, Methan enthaltenden Gasstroms aus einem Rohgasstrom, der Methan enthält und mit höheren Kohlenwasserstoffen, Kohlendioxid und gegebenenfalls weiteren Verunreinigungen (wie z.B. partikulären Verunreinigungen) verunreinigt ist, zur Verfügung. Der Rohgasstrom kann zusätzlich weitere Gase, insbesondere Brenngase wie beispielsweise Ethan und/oder inerte Gase wie Stickstoff, enthalten. Das Verfahren umfasst die folgenden Schritte:
- Abscheiden partikulärer Verunreinigungen (z.B. Verunreinigungen, die die Membran der Membrantrennvorrichtung verblocken würden und durch eine allfällige Regeneration der Membran nicht entfernt werden könnten) aus dem Rohgasstrom (insbesondere durch Filtration, beispielsweise mit einem Filter mit einer Porengröße von 0,1-0,005 µm, bevorzugt 0,03-0,007 µm, insbesondere 0,01 µm) und vorzugsweise Abscheiden eines Teils der höheren Kohlenwasserstoffe aus dem Rohgasstrom (gegebenenfalls auch durch dieselbe Filtration), um einen vorbehandelten, insbesondere vorgefilterten, Gasstrom zu erhalten,
- Konditionieren, nämlich Aufheizen, auf eine Temperatur T₂ (bei der die Verblockung der Membran der Membrantrennvorrichtung durch noch im Gasstrom befindliche höhere Kohlenwasserstoffe verringert ist bzw. bei der die Kondensation noch im Gasstrom befindlicher höhere Kohlenwasserstoffe an der Oberfläche dieser Membran verringert ist, z.B. gegenüber der Umgebungstemperatur), um einen konditionierten Gasstrom zu erhalten, wobei die Temperatur T₂ so eingestellt wird, dass die Permeanz der Membrantrennvorrichtung in Bezug auf Kohlendioxid über einen Zeitabschnitt t im Mittel konstant bleibt, und
- Einleiten des konditionierten Gasstroms in eine Membrantrennvorrichtung (die eine Membran mit höherer Permeabilität für Kohlendioxid als für Methan aufweist), um einen Teil des darin befindlichen Kohlendioxids als Permeat abzutrennen, wodurch der aufgereinigte, Methan enthaltende Gasstrom als Retentat erhalten wird.

Üblicherweise wird das Abscheiden (zumindest teilweise) bei einer Temperatur T₁ durchgeführt, wobei die Temperatur T₂ höher als die Temperatur T₁ ist. Es ist aber beispielsweise auch möglich, den Konditionierungsschritt vor dem Abscheiden durchzuführen und sowohl das Abscheiden als auch das Einleiten bei der Temperatur T₂ durchzuführen.

Der Rohgasstrom enthält vorzugsweise Biogas, Deponiegas, Prozessgass, Erdgas oder Erdölbegleitgas (bzw. besteht daraus). Üblicherweise beträgt der Anteil an Methan im Rohgasstrom zumindest 50%, bevorzugt zumindest 60%, mehr bevorzugt zumindest 70%, noch mehr bevorzugt zumindest 80%, insbesondere zumindest 90%. Der Anteil an höheren Kohlenwasserstoffen (insbesondere ab C₆) im Rohgasstrom beträgt vorzugsweise 0,1% bis 10%, bevorzugt 0,5% bis 5%. Der Anteil an Kohlendioxid im Rohgasstrom beträgt vorzugsweise 1% bis 20%, bevorzugt 2% bis 10%.

Im Zuge der vorliegenden Erfindung hat sich gezeigt, dass durch Konditionierung des Gasstroms auf eine gewisse Temperatur (üblicherweise zumindest 30°C, bevorzugt zumindest 40°C, mehr bevorzugt zumindest 50°C, noch mehr bevorzugt zumindest 60°C, insbesondere zumindest 70°C oder gar zumindest 80°) die Verblockung der Membran reduziert wird. Überraschenderweise führt der dauerhafte Betrieb bei höherer Temperatur nicht zu einer übermäßigen Beeinträchtigung der Stabilität der Membran bzw. zu einer übermäßigen Verschlechterung der Trennleistung. Durch das erfindungsgemäße Verfahren kann der Anteil an Kohlendioxid im aufgereinigten, Methan enthaltenden Gasstrom auf unter 10%, bevorzugt unter 5%, noch mehr bevorzugt unter 2,5% reduziert werden.

Zum optionalen Abscheiden eines Teils der höheren Kohlenwasserstoffe aus dem Rohgasstrom können verschiedene Prozesse herangezogen werden. Im Stand der Technik bekannt sind beispielsweise die kryogene Trennung, die adsorptive Trennung (Nutzung von Adsorptionsmitteln wie Zeolithe oder Aktivkohle, die höhere Kohlenwasserstoffe binden), die absorptive Trennung (Verwendung eines Lösungsmittels, das höhere Kohlenwasserstoffe absorbiert, während Methan im Gasstrom) oder die Kombination von Filtration und Kondensation. Das erfindungsgemäße Verfahren ist besonders gut geeignet für die adsorptive Trennung (z.B. über einen Aktivkohlefilter), die zwar einen höheren Anteil an Verunreinigungen im vorbehandelten Gasstrom belässt, dafür aber deutlich kostengünstiger ist.

Vorteilhafterweise entspricht die Temperatur T₁ folglich der Umgebungstemperatur (insbesondere der Außenlufttemperatur). Mit anderen Worten wird der Rohgasstrom zum Abscheiden eines Teils der höheren Kohlenwasserstoffe vorzugsweise keiner Kühlung (zur Kondensation) unterworfen. Damit einhergehend liegt die Temperatur T₂ vorzugsweise über der Umgebungstemperatur.

Zum Konditionieren, insbesondere Aufheizen, des Gasstroms auf die Temperatur T₂ können übliche Prozesse aus dem Stand der Technik herangezogen werden. Beispielsweise kann der vorbehandelte Gasstrom in einem Durchlauferhitzer aufgeheizt werden. Auch der Einsatz eines Wärmetauschers ist möglich.

Ein größerer Temperaturunterschied zwischen T₁ und T₂ hat sich als vorteilhaft zur Verhinderung der Verblockung der Membran herausgestellt. So ist die Temperatur T₂ vorzugsweise zumindest 10°C, bevorzugt zumindest 20°C, mehr bevorzugt zumindest 30°C, noch mehr bevorzugt zumindest 40°C, insbesondere zumindest 50°C höher als die Temperatur T₁. Es ist außerdem bevorzugt, dass die Temperatur T₂ zumindest 30°C, bevorzugt zumindest 40°C, mehr bevorzugt zumindest 50°C, noch mehr bevorzugt zumindest 60°C, insbesondere zumindest 70°C oder gar zumindest 80°C beträgt.

Zur Erhöhung der Energieeffizienz ist es daher auch besonders bevorzugt, wenn die Membrantrennvorrichtung eine Wärmedämmung (beispielsweise eine Dämmung mit Polyurethanschaum, Mineralwolle und/oder reflektierenden Folien) gegenüber der Umgebung aufweist.

Gemäß der Erfindung wird die Temperatur T₂ so eingestellt, dass die Permeanz der Membrantrennvorrichtung in Bezug auf Kohlendioxid über einen Zeitabschnitt t im Mittel konstant bleibt, vorzugsweise wobei der Zeitabschnitt t zumindest 12 h, bevorzugt zumindest 24 h, mehr bevorzugt zumindest 36 h, noch mehr bevorzugt zumindest 48 h, insbesondere zumindest 72 h beträgt. Mit anderen Worten wird die Temperatur T₂ so eingestellt, dass sich im Betrieb ein Gleichgewicht zwischen sich an die Membran anlagernden, höheren Kohlenwasserstoffen und von der Membran verdampfenden höheren Kohlenwasserstoffen ergibt.

In einer bevorzugtem Ausführungsform kann zur Regeneration der Membrantrennvorrichtung zu einem vorbestimmten Zeitpunkt (beispielsweise in regelmäßigen Zeitabständen oder wenn sich ergibt, dass die Permeanz der Membrantrennvorrichtung im Mittel über den Zeitabschnitt t um einen gewissen Wert abgefallen ist) die Membrantrennvorrichtung auf eine Temperatur T3 erhitzt werden, wobei die Temperatur T₃ höher ist als die Temperatur T₂. Vorteilhafterweise ist die Temperatur T₃ zumindest 10°C, bevorzugt zumindest 20°C, mehr bevorzugt zumindest 30°C, noch mehr bevorzugt zumindest 40°C, insbesondere zumindest 50°C höher als die Temperatur T₂. Es ist außerdem bevorzugt, dass die Temperatur T₃ zumindest 50°C, bevorzugt zumindest 70°C, mehr bevorzugt zumindest 90°C, noch mehr bevorzugt zumindest 110°C, insbesondere zumindest 130°C oder gar zumindest 150°C beträgt. Zur Regeneration wird vorzugsweise das in der WO 2015/071257 A1 offenbarte Verfahren herangezogen.

Vorzugsweise erfolgt die Regeneration gegen die (gewöhnliche) Betriebsrichtung der Membrantrennvorrichtung, bevorzugt wobei permeatseitig ein Gas oder Gasgemisch, beispielsweise Stickstoff oder Luft, eingebracht wird, insbesondere wobei das nach Durchtritt durch die Membran der Membrantrennvorrichtung mit Verunreinigungen beladene Gas oder Gasgemisch über einen Feedgas-Einlass und/oder einen Retentat-Auslass der Membrantrennvorrichtung abgeführt wird.

Bei der Membran der Membrantrennvorrichtung kann es sich beispielsweise um eine Flachmembran oder eine Hohlfasermembran handeln. Für die Membrantrennvorrichtung geeignete Membranen mit höherer Permeabilität für Kohlendioxid als für Methan sind aus dem Stand der Technik bekannt. Dies sind vorzugsweise gewisse Polymermembranen. Im Allgemeinen werden Membranen mit einer Trennschicht aus einem glasartigen Polymer, d.h. einem Polymer mit einem Glasübergangspunkt bei einer Temperatur oberhalb der Betriebstemperatur der Membran, eine höhere Permeabilität für Kohlendioxid als für Methan bereitstellen. Bei dem Polymer kann es sich um ein Polyetherimid, ein Polycarbonat, ein Polyamid, ein Polybenzoxazol, ein Polybenzimidazol, ein Polysulfon oder ein Polyimid handeln. Die Membran der Membrantrennvorrichtung umfasst vorzugsweise zu mindestens 80 Gew.-% ein Polyimid oder eine Mischung von Polyimiden.

Gemäß einer weiteren bevorzugten Ausführungsform beträgt der Anteil an Methan im aufgereinigte, Methan enthaltenden Gasstrom zumindest 60%, bevorzugt zumindest 70%, mehr bevorzugt zumindest 80%, noch mehr bevorzugt zumindest 90%, insbesondere zumindest 95%. Es versteht sich, dass dieser Anteil höher als der ursprüngliche Methananteil im Rohgasstrom ist.

Bei den "höheren Kohlenwasserstoffen" handelt es sich hierin gemäß einer bevorzugten Definition um C₆-Kohlenwasserstoffe und darüber, was bedeutet, dass diese Verbindungen mindestens sechs Kohlenstoffatome in ihrer Molekularstruktur enthalten. Diese Gruppe umfasst Alkane, Alkene und Alkine mit einer Kettenlänge von C₆ oder mehr. Beispiele für solche höheren Kohlenwasserstoffe sind Hexan, Heptan und Oktan, sowie ihre ungesättigten Analoga wie Hexen und Hexin. Auch aliphatische Alkohole bzw. Ketone mit entsprechender Kettenlänge fallen in diese Gruppe.

Bei "partikulären Verunreinigungen" handelt es sich hierin gemäß einer bevorzugten Definition um Verunreinigungen, die aus Feststoff- bzw. Flüssigkeitspartikeln bestehen, also z.B. Staub bzw. Aerosole. Bevorzugt handelt es sich dabei um Feststoffpartikel. Die Feststoff- bzw. Flüssigkeitspartikel haben beispielsweise einen mittleren Partikeldurchmesser von 100 µm bis 1 µm.

Hierin beziehen sich alle Prozentangaben, die sich auf Anteile von Gasen in Gasgemischen beziehen, auf Vol%.

Hierin beziehen sich alle Druckangaben, die in "bar" angegeben sind, auf den Absolutdruck, also "bar absolut".

Die vorliegende Erfindung wird nun im folgenden Beispiel näher erläutert, auf welches sie jedoch nicht beschränkt ist.

Der Rohgasstrom wird aus einer Biogasanlage bezogen. Die Zusammensetzung des Biogas-Rohgasstroms schwankt abhängig von den Betriebsbedingungen, ist aber im Mittel: 60% Methan, 30% Kohlendioxid, 9% Stickstoff, Spuren von Wasserstoff und etwa 1% höhere Kohlenwasserstoffe.

Im ersten Schritt des Verfahrens wird der Rohgasstrom bei einem Druck von etwa 9 bar durch einen Aktivkohlefilter geführt, um grobe Verunreinigungen (z.B. Staub), die die Membran verblocken würden und durch die Regeneration nicht entfernt werden können, und einen Teil der höheren Kohlenwasserstoffe abzuscheiden. Diese Vorbehandlung reduziert den Anteil dieser Kohlenwasserstoffe auf rund 0,25%. Die Abscheidung findet bei einer Umgebungstemperatur von 15°C statt, die der Temperatur T₁ entspricht.

Anschließend wird der so vorbehandelte Gasstrom in einem Durchlauferhitzer auf eine Temperatur von 70°C (T₂) gebracht.

Der aufgeheizte vorbehandelte Gasstrom wird dann in die Membrantrennvorrichtung eingeleitet, die eine Hohlfasermembran mit Polyimid aufweist. Während des Trennprozesses, der bei einem Druck von etwa 10 bar stattfindet, wird ein Großteil des Kohlendioxids als Permeat abgetrennt, und das Retentat, also der aufgereinigte, Methan enthaltende Gasstrom, enthält - je nach Verweilzeit des Gasstroms in der Membran und der Höhe der in etwa gleichbleibenden Permeanz für Kohlendioxid - weniger als 5% Kohlendioxid.

Die Permeanz der Membran für Kohlendioxid wird laufend überwacht. Sobald ein Abfallen der Permeanz (Mittel über 1 Stunde) über einen Schwellwert registriert wird, wird die Temperatur T2 schrittweise erhöht, um die Permeanz gleichbleibend zu halten.

Wenn die Permeanz trotz mehrmaliger Erhöhung der Temperatur T2 weiter abnehmen, wird ein Regenerationszyklus durchgeführt, bei dem die Membran mit Heißluft bei einer Temperatur von 120°C oder höher regeneriert wird. Details des Regenerationsverfahrens sind in der WO 2015/071257 A1 beschrieben. Die regelmäßige Regeneration trägt dazu bei, die Leistung der Membran über längere Zeiträume aufrechtzuerhalten und damit Kosten und Aufwand zu verringern, sowie die Betriebsfähigkeit der Anlage zu erhöhen.

Nach dem Regenerationszyklus wird die Aufreinigung aus dem Rohgasstrom fortgesetzt.

## Patentansprüche

1. Verfahren zur Herstellung eines aufgereinigten, insbesondere in Bezug auf den Kohlendioxidgehalt reduzierten, Methan enthaltenden Gasstroms aus einem Rohgasstrom, wobei der Rohgasstrom Methan enthält und mit höheren Kohlenwasserstoffen, Kohlendioxid und gegebenenfalls weiteren Verunreinigungen verunreinigt ist, wobei das Verfahren zumindest die folgenden Schritte umfasst:
- Abscheiden partikulärer Verunreinigungen und vorzugsweise eines Teils der höheren Kohlenwasserstoffe aus dem Rohgasstrom, um einen vorbehandelten, insbesondere vorgefilterten, Gasstrom zu erhalten,
- Konditionieren, nämlich Aufheizen, auf eine Temperatur T₂, um einen konditionierten Gasstrom zu erhalten, wobei die Temperatur T₂ so eingestellt wird, dass die Permeanz der Membrantrennvorrichtung in Bezug auf Kohlendioxid über einen Zeitabschnitt t im Mittel konstant bleibt und
- Einleiten des konditionierten Gasstroms in eine Membrantrennvorrichtung, um einen Teil des darin befindlichen Kohlendioxids als Permeat abzutrennen, wodurch der aufgereinigte, Methan enthaltende Gasstrom als Retentat erhalten wird.

2. Verfahren gemäß Anspruch 1, wobei das Abscheiden zumindest teilweise bei einer Temperatur T₁ durchgeführt wird, wobei die Temperatur T₂ höher als die Temperatur T₁ ist; vorzugsweise wobei die Temperatur T₂ zumindest 10°C, bevorzugt zumindest 20°C, mehr bevorzugt zumindest 30°C, noch mehr bevorzugt zumindest 40°C, insbesondere zumindest 50°C höher ist als die Temperatur T₁ und/oder vorzugsweise wobei die Temperatur T₁ der Umgebungstemperatur entspricht.

3. Verfahren gemäß Anspruch 1 oder 2, wobei die Temperatur T₂ über der Umgebungstemperatur liegt.

4. Verfahren gemäß einem der Ansprüche 1 bis 3, wobei die Temperatur T₂ zumindest 30°C, bevorzugt zumindest 40°C, mehr bevorzugt zumindest 50°C, noch mehr bevorzugt zumindest 60°C, insbesondere zumindest 70°C oder gar zumindest 80°C beträgt.

5. Verfahren gemäß einem der Ansprüche 1 bis 4, wobei der Zeitabschnitt t zumindest 12 h, bevorzugt zumindest 24 h, mehr bevorzugt zumindest 36 h, noch mehr bevorzugt zumindest 48 h, insbesondere zumindest 72 h beträgt.

6. Verfahren gemäß Anspruch 5, wobei die Temperatur T₃ zumindest 10°C, bevorzugt zumindest 20°C, mehr bevorzugt zumindest 30°C, noch mehr bevorzugt zumindest 40°C, insbesondere zumindest 50°C höher ist als die Temperatur T₂.

7. Verfahren gemäß Anspruch 5 oder 6, wobei die Temperatur T₃ zumindest 50°C, bevorzugt zumindest 70°C, mehr bevorzugt zumindest 90°C, noch mehr bevorzugt zumindest 110°C, insbesondere zumindest 130°C oder gar zumindest 150°C beträgt.

8. Verfahren gemäß einem der Ansprüche 1 bis 7, wobei die Membrantrennvorrichtung eine Wärmedämmung gegenüber der Umgebung aufweist.

9. Verfahren gemäß einem der Ansprüche 1 bis 8, wobei der Rohgasstrom Biogas, Deponiegas, Prozessgas, Erdgas oder Erdölbegleitgas enthält.

10. Verfahren gemäß einem der Ansprüche 1 bis 9, wobei der Anteil an Methan im Rohgasstrom zumindest 50%, bevorzugt zumindest 60%, mehr bevorzugt zumindest 70%, noch mehr bevorzugt zumindest 80%, insbesondere zumindest 90% beträgt.

11. Verfahren gemäß einem der Ansprüche 1 bis 10, wobei der Anteil an höheren Kohlenwasserstoffen im Rohgasstrom 0,1% bis 10%, bevorzugt 0,5% bis 5% beträgt.

12. Verfahren gemäß einem der Ansprüche 1 bis 11, wobei der Anteil an Kohlendioxid im Rohgasstrom 1% bis 30%, bevorzugt 2% bis 20%, insbesondere 3% bis 15% beträgt.

13. Verfahren gemäß einem der Ansprüche 1 bis 12, wobei der Anteil an Kohlendioxid im aufgereinigten, Methan enthaltenden Gasstrom unter 10%, bevorzugt unter 5%, noch mehr bevorzugt unter 2,5% beträgt.

14. Verfahren gemäß einem der Ansprüche 1 bis 13, wobei die Membrantrennvorrichtung eine Polymermembran, bevorzugt eine Polyimidmembran, aufweist.

## Claims

1. Method for producing a purified methane-containing gas stream, particularly reduced in terms of carbon dioxide content, from a raw gas stream, wherein the raw gas stream contains methane and is contaminated with higher hydrocarbons, carbon dioxide and possibly further impurities, wherein the method comprises at least the following steps:
- Separating particulate impurities and preferentially a portion of the higher hydrocarbons from the raw gas stream to obtain a pre-treated, particularly pre-filtered, gas stream,
- Conditioning, namely heating, to a temperature T2, to obtain a conditioned gas stream, wherein the temperature T2 is adjusted such that the permeance of the membrane separation device with respect to carbon dioxide remains constant on average over a time period t, and
- Introducing the conditioned gas stream into a membrane separation device to separate a portion of the carbon dioxide contained therein as permeate, whereby the purified, methane-containing gas stream is obtained as retentate.

2. Method according to claim 1, wherein the separation is carried out at least partially at a temperature T1, wherein the temperature T2 is higher than the temperature T1; preferentially wherein the temperature T2 is at least 10 °C, preferably at least 20 °C, more preferably at least 30 °C, even more preferably at least 40 °C, particularly at least 50 °C higher than the temperature T1 and/or preferentially wherein the temperature T1 corresponds to the ambient temperature.

3. Method according to claim 1 or 2, wherein the temperature T2 is above the ambient temperature.

4. Method according to any one of claims 1 to 3, wherein the temperature T2 is at least 30 °C, preferably at least 40 °C, more preferably at least 50 °C, even more preferably at least 60 °C, particularly at least 70 °C or even at least 80 °C.

5. Method according to any one of claims 1 to 4, wherein the time period t is at least 12 h, preferably at least 24 h, more preferably at least 36 h, even more preferably at least 48 h, particularly at least 72 h.

6. Method according to claim 5, wherein the temperature T3 is at least 10 °C, preferably at least 20 °C, more preferably at least 30 °C, even more preferably at least 40 °C, particularly at least 50 °C higher than the temperature T2.

7. Method according to claim 5 or 6, wherein the temperature T3 is at least 50 °C, preferably at least 70 °C, more preferably at least 90 °C, even more preferably at least 110 °C, particularly at least 130 °C or even at least 150 °C.

8. Method according to any one of claims 1 to 7, wherein the membrane separation device has a thermal insulation against the environment.

9. Method according to any one of claims 1 to 8, wherein the raw gas stream contains biogas, landfill gas, process gas, natural gas or associated petroleum gas.

10. Method according to any one of claims 1 to 9, wherein the proportion of methane in the raw gas stream is at least 50%, preferably at least 60%, more preferably at least 70%, even more preferably at least 80%, particularly at least 90%.

11. Method according to any one of claims 1 to 10, wherein the proportion of higher hydrocarbons in the raw gas stream is 0.1% to 10%, preferably 0.5% to 5%.

12. Method according to any one of claims 1 to 11, wherein the proportion of carbon dioxide in the raw gas stream is 1% to 30%, preferably 2% to 20%, particularly 3% to 15%.

13. Method according to any one of claims 1 to 12, wherein the proportion of carbon dioxide in the purified, methane-containing gas stream is below 10%, preferably below 5%, even more preferably below 2.5%.

14. Method according to any one of claims 1 to 13, wherein the membrane separation device has a polymer membrane, preferably a polyimide membrane.

## Revendications

1. Procédé de production d'un flux de gaz purifié contenant du méthane, notamment réduit en teneur en dioxyde de carbone, à partir d'un flux de gaz brut, ledit flux de gaz brut contenant du méthane et étant contaminé par des hydrocarbures supérieurs, du dioxyde de carbone et éventuellement d'autres impuretés, le procédé comprenant au moins les étapes suivantes :
- Séparation des impuretés particulaires et, de préférence, d'une partie des hydrocarbures supérieurs du flux de gaz brut, pour obtenir un flux de gaz prétraité, notamment préfiltré,
- Conditionnement, à savoir chauffage, à une température T2, pour obtenir un flux de gaz conditionné, la température T2 étant réglée de manière à ce que la perméance du dispositif de séparation membranaire par rapport au dioxyde de carbone demeure constante en moyenne pendant une durée t, et
- Introduction du flux de gaz conditionné dans un dispositif de séparation membranaire, afin de séparer une partie du dioxyde de carbone qui s'y trouve sous forme de perméat, ce qui permet d'obtenir le flux de gaz purifié contenant du méthane sous forme de rétentat.

2. Procédé selon la revendication 1, dans lequel la séparation est effectuée au moins partiellement à une température T1, la température T2 étant supérieure à la température T1 ; de préférence, la température T2 étant au moins 10°C, de préférence au moins 20°C, plus préférentiellement au moins 30°C, encore plus préférentiellement au moins 40°C, notamment au moins 50°C supérieure à la température T1 et/ou, de préférence, la température T1 correspondant à la température ambiante.

3. Procédé selon la revendication 1 ou 2, dans lequel la température T2 est supérieure à la température ambiante.

4. Procédé selon l'une quelconque des revendications 1 à 3, dans lequel la température T2 est d'au moins 30°C, de préférence au moins 40°C, plus préférentiellement au moins 50°C, encore plus préférentiellement au moins 60°C, notamment au moins 70°C, voire au moins 80°C.

5. Procédé selon l'une quelconque des revendications 1 à 4, dans lequel la durée t est d'au moins 12 h, de préférence au moins 24 h, plus préférentiellement au moins 36 h, encore plus préférentiellement au moins 48 h, notamment au moins 72 h.

6. Procédé selon la revendication 5, dans lequel la température T3 est au moins 10°C, de préférence au moins 20°C, plus préférentiellement au moins 30°C, encore plus préférentiellement au moins 40°C, notamment au moins 50°C supérieure à la température T2.

7. Procédé selon la revendication 5 ou 6, dans lequel la température T3 est d'au moins 50°C, de préférence au moins 70°C, plus préférentiellement au moins 90°C, encore plus préférentiellement au moins 110°C, notamment au moins 130°C, voire au moins 150°C.

8. Procédé selon l'une quelconque des revendications 1 à 7, dans lequel le dispositif de séparation membranaire présente une isolation thermique par rapport à l'environnement.

9. Procédé selon l'une quelconque des revendications 1 à 8, dans lequel le flux de gaz brut contient du biogaz, du gaz de décharge, du gaz de procédé, du gaz naturel ou du gaz associé au pétrole.

10. Procédé selon l'une quelconque des revendications 1 à 9, dans lequel la proportion de méthane dans le flux de gaz brut est d'au moins 50%, de préférence au moins 60%, plus préférentiellement au moins 70%, encore plus préférentiellement au moins 80%, notamment au moins 90%.

11. Procédé selon l'une quelconque des revendications 1 à 10, dans lequel la proportion d'hydrocarbures supérieurs dans le flux de gaz brut est de 0,1% à 10%, de préférence de 0,5% à 5%.

12. Procédé selon l'une quelconque des revendications 1 à 11, dans lequel la proportion de dioxyde de carbone dans le flux de gaz brut est de 1% à 30%, de préférence de 2% à 20%, notamment de 3% à 15%.

13. Procédé selon l'une quelconque des revendications 1 à 12, dans lequel la proportion de dioxyde de carbone dans le flux de gaz purifié contenant du méthane est inférieure à 10%, de préférence inférieure à 5%, encore plus préférentiellement inférieure à 2,5%.

14. Procédé selon l'une quelconque des revendications 1 à 13, dans lequel le dispositif de séparation membranaire comprend une membrane polymère, de préférence une membrane polyimide.
